# EUROPEAN PATENT APPLICATION

(11) **EP 1 621 244 A1**
(43) Date of publication of application: **01.02.2006**
(21) Application number: 04728941.8
(22) Date of filing: 22.04.2004
(51) Int. Cl.: B01D 53/02

(54) **CHEMICAL FILTER**

(30) Priority: 24.04.2003 JP 2003119818
(71) Applicant: Organo Corporation, Tokyo 136-8631 (JP)
(72) Inventor: INOUE, Hiroshi, c/o ORGANO CORPORATION, Tokyo 1368631 (JP); YAMANAKA, Koji, c/o ORGANO CORPORATION, Tokyo 1368631 (JP); YOSHIDA, Akiko, c/o ORGANO CORPORATION, Tokyo 1368631 (JP); KAWADA, Kazuhiko, c/o ORGANO CORPORATION, Tokyo 1368631 (JP); TORIYAMA, Yukiko, c/o ORGANO CORPORATION, Tokyo 1368631 (JP)
(74) Representative: Fiesser, Gerold Michael
(86) International application number: PCT/JP2004/005812
(87) International publication number: WO 2004/094040

(57) **Abstract**

A chemical filter, **characterized in that** it uses, as an adsorption layer, an organic porous ion exchanger which has an open pore structure wherein a meso pore having an average diameter of 5 to 1,000 µm is formed in the wall between a macro pore and a macro pore connected with each other, has a total pore volume of 1 to 50 ml/g, has ion-exchange groups being uniformly distributed, and has an ion-exchange capacity of 3.0 mg equivalent/g-dry porous material or more.

The chemical filter can maintain the capacity of adsorbing and removing a gaseous contaminant even at an enhanced gas transmission rate, and can remove also a trace amount of a gaseous contaminant.

## Description

### TECHNICAL FIELD

The present invention relates to a filter for cleaning gases and, in particular, to a chemical filter for removing organic gaseous pollutants and inorganic gaseous pollutants from the air and atmosphere in order to produce a highly pure atmosphere in clean rooms, clean benches, and the like used in semiconductor industries and medical facilities.

### BACKGROUND ART

Conventionally, as filters for producing a highly pure atmosphere in clean rooms and the like, a HEPA (High Efficiency Particulate Air) filter and ULPA (Ultra Low Particulate Air) filter which mainly remove fine particles from gases have been used. However, the HEPA filter and ULPA filter remove neither organic gaseous pollutants nor inorganic gaseous pollutants. In order to remove these gaseous pollutants, a chemical filter packed with chemical-impregnated charcoal which has been impregnated with an acid or alkali has to be used. Japanese Patent Application Laid-open No. 2002-248308 discloses a chemical filter having a physical adsorption layer laminated on the downstream side of an ion-exchange resin layer, to capture pollutants emerging from said ion-exchanger resin. Japanese Patent Application Laid-open No. 10-230118 discloses a chemical filter formed from layers of strongly acidic cation fiber and weakly basic anion fiber arranged along the filtering direction. Thus, the use of chemical-impregnated charcoal, ion-exchange resin beads, and ion-exchange fibers have been known in the art.

### (Patent Document 1)

Japanese Patent Application Laid-open No. 2002-248308 (Claim 1)

### (Patent Document 2)

Japanese Patent Application Laid-open No. 10-230118 (Claim 1)

### (Patent Document 3)

Japanese Patent Application Laid-open No. 2002-306976 (Claims 1-5)

The chemical-impregnated charcoal, however, suffer from shortcomings during its use such as flow-out of the impregnated material and dispersion of neutral salts deposited on the surface of activated carbon as contaminants in a gas. Since ion-exchange resins and ion-exchange fibers themselves generate organic contaminants during use, a special physical adsorption layer must be provided on the downstream side. In addition, in the filter in which an ion-exchange resin is retained, ion-exchange proceeds only slowly inside the resin and not all of the ion exchange capacities can be effectively used. Specifically, if a gas permeation rate through the filter is large, the filter's capability of adsorbing and removing gaseous contaminants is not fully utilized. On the other hand, the filter in which ion-exchange fiber is used has a problem when a gas permeation rate is large, wherein ion-exchange fiber will deform and decrease its removal efficiency. What is worse, since the ion-exchange fiber has only a small ion exchange capacity, the filtering capacity is easily broke through if the filter comes into contact with gas to be processed containing a high concentration of contaminants.

Japanese Patent Application Laid-open No. 2002-306976 discloses an organic porous ion exchanger having a continuous pore structure comprising macropores and mesopores (the macropores being interconnected with each other forming mesopores with an average diameter of 1 to 1,000 µm in the interconnected parts), and having a total pore volume of 1 to 50 ml/g, uniformly distributed ion exchange groups, and an ion exchange capacity of 0.5 mg eq./g or more on a dry basis, a deionizing module with the organic porous ion exchanger filled in a space between two ion exchange membranes, and a power-saving electrodeionization deionized water production unit equipped with the deionizing module. However, the Japanese Patent Application Laid-open No. 2002-306976 does not describe the use of the organic porous ion exchanger having a continuous pore structure as a chemical filter.

An object of the present invention is to remedy the above shortcomings to the prior art and to provide a chemical filter which can maintain adsorbing/removing capability of gaseous pollutants at a high gas permeation rate and can even remove minute quantities of gaseous pollutants.

### DISCLOSURE OF THE INVENTION

As a result of extensive studies to achieve the above object, the inventors of the present invention have found that the organic porous ion exchanger having a continuous pore structure applicable to a deionizing module of an electrodeionization water production unit has an excellent capability of adsorbing gaseous pollutants and that if this organic porous ion exchanger is used as an adsorption layer of a chemical filter, it is possible for the chemical filter to maintain adsorbing/removing capability of gaseous pollutants at a high gas permeation rate and even to remove minute quantities of gaseous pollutantst. This finding has led to the completion of the present invention.

Accordingly, the present invention provides a chemical filter comprising an adsorption layer of an organic porous ion exchanger having a continuous pore structure comprising macropores and mesopores, the macropores being interconnected with each other forming mesopores with an average diameter of 5 to 1,000 µm in the interconnected parts, and having a total pore volume of 1 to 50 ml/g, uniformly distributed ion exchange groups, and an ion exchange capacity of 3.0 mg eq./g or more on a dry basis.

### BEST MODE FOR CARRYING OUT THE INVENTION

The basic structure of the organic porous ion exchanger used as an adsorbing layer in the chemical filter of the present invention is a continuous pore structure which comprises macropores and mesopores, wherein macropores are interconnected with each other forming mesopores with an average diameter of 5 to 1,000 µm, preferably 10 to 100 µm, described in Japanese Patent Application Laid-open No. 2002-306976. Specifically, the continuous pores usually have a structure in which macropores with an average diameter of 5 to 5,000 µm are layered. The layered section has mesopores functioning as common openings, providing an open pore structure. In the open pore structure, pores formed from the macropores and mesopores become flowing paths for gas. The overlapped macropores usually have 1 to 12 layers of macropores, with many having 3 to 10 layers of macropores. Mesopores with an average diameter of less than 5 µm are undesirable because mesopores with a small average diameter unduly increase the pressure loss during permeation of a gas. On the other hand, an average diameter of mesopores exceeding 1,000 µm is undesirable because the gas comes into contact the organic porous ion exchanger only insufficiently, resulting in reduced adsorption capability. The above-described continuous pore structure of the organic porous ion exchanger ensures uniform formation of macropore groups and mesopore groups and, at the same time, remarkably increases the pore volume and specific area as compared with particle-aggregation type porous ion exchangers described in Japanese Patent Publication 62-42658 and the like. For this reason, adsorption capability of a chemical filter will be markedly improved if such an organic porous ion exchanger is used as an adsorption layer of a chemical filter.

The organic porous ion exchanger has a total pore volume of 1 to 50 ml/g. If the total pore volume is less than 1 ml/g, the amount of gas permeating through a unit area becomes small, resulting in a low processing capacity. The total pore volume of more than 50 ml/g is undesirable because the organic porous material has little mechanical strength. The total pore volume of the conventional porous ion exchanger is in the range of 0.1 to 0.9 ml/g at most. In the present invention, an ion exchanger with a greater total pore volume in the range of 1 to 50 ml/g can be used.

When air is used as a typical gas permeating the organic porous ion exchanger with a thickness of 10 mm, the rate of permeation of gas through the organic porous ion exchanger is preferably in a range of 100 to 50,000 m³/min·m²·MPa. If the rate of permeation and the total pore volume are in the above ranges, the organic porous ion exchanger can exhibit excellent performance when used as an adsorbing layer of a chemical filter, such as a large gas contact area, a smooth gas flow, and sufficient mechanical strength. An organic polymer material having a crosslinking structure is used as the material for the skeleton that forms the continuous pores. Such a polymer material preferably contains crosslinking structural units in an amount of 1 to 90 mol% of the total amount of all structural units forming the polymer material. If the amount of the crosslinking structural units is less than 1 mol%, the mechanical strength is insufficient. If the amount is more than 90 mol%, it is diffcult to introduce ion exchange groups, resulting in a product with an insufficient ion-exchange capacity. There are no specific limitations to the type of polymer material. Examples include styrene polymers such as polystyrene, poly(α-methylstyrene), and polyvinylbenzyl chloride; polyolefins such as polyethylene and polypropylene; poly(halogenated olefin) such as polyvinyl chloride and polytetrafluoroethylene; nitrile polymers such as polyacrylonitrile; (meth)acrylate polymers such as polymethyl methacrylate and polyethyl acrylate; styrene-divinylbenzene copolymer, vinyl benzyl chloride-divinylbenzene copolymer, and the like. The above polymers may be either homopolymers obtained by polymerizing one type of monomer or copolymers obtained by polymerizing two or more types of monomers. In addition, a blend of two or more polymers may be used. Among these organic polymers, a styrene-divinylbenzene copolymer and a vinylbenzyl chloride-divinylbenzene copolymer are preferable in view of ease of introduction of ion exchange groups and high mechanical strength. The continuous pore structure of the organic porous ion exchanger of the present invention can be easily observed by using a scanning electron microscope (SEM).

The organic porous ion exchanger used in the chemical filter of the present invention contains uniformly distributed ion exchange groups and has an ion-exchange capacity of 3.0 mg eq./g or more, and preferably 3.5 to 5.5 mg eq./g of dry porous material. If the ion-exchange capacity is less than 3.0 mg eq./g of dry porous material, the adsorbing capability is insufficient. If the distribution of ion exchange groups is not uniform, there are problems such as fluctuation in the adsorbing capability, a decrease of removal performance, and a decrease in life. The "uniform distribution of ion exchange groups" herein refers to uniformity of ion exchange group distribution in the order of µm or less. Distribution of ion exchange groups can be easily confirmed by using an analytical technique such as EPMA, SIMS, or the like. Cationic exchange groups such as a sulfonic acid group, carboxylic acid group, iminodiacetic acid group, phosphoric acid group, and phosphate group; anionic exchange groups such as a quaternary ammonium group, tertiary amino group, secondary amino group, primary amino group, polyethylene imine group, tertiary sulfonium group, and phosphonium group; amphoteric ion exchange groups such as an amino phosphoric acid group and sulfobetaine; and the like can be given as ion exchange groups to be introduced into the organic porous material.

There are no specific limitations to the method for manufacturing the organic porous ion exchanger. The methods described in Japanese Patent Application Laid-open No. 2002-306976 can be used. Specifically, a method of forming the organic porous ion exchanger from components containing ion exchange groups in one step, a method of first forming an organic porous material from components not containing an ion exchange group and then introducing ion exchange groups, and the like can be given. More specifically, ion exchange groups can be introduced by preparing a water-in-oil type emulsion by mixing an oil-soluble monomer not containing an ion exchange group, a surfactant, water, and as required, a polymerization initiator, and polymerizing the water-in-oil type emulsion.

The oil-soluble monomer not containing an ion exchange group is a lipophilic monomer that does not contain an ion exchange group such as a carboxylic acid group or sulfonic acid group and has low solubility in water. Specific examples of such a monomer include styrene, α-methylstyrene, vinyl toluene, vinylbenzyl chloride, divinylbenzene, ethylene, propylene, isobutene, butadiene, isoprene, chloroprene, vinyl chloride, vinyl bromide, vinylidene chloride, tetrafluoroethylene, acrylonitrile, methacrylonitrile, vinyl acetate, methyl acrylate, ethyl acrylate, butyl acrylate, 2-ethylhexyl acrylate, trimethylolpropane triacrylate, butanediol diacrylate, methyl methacrylate, ethyl methacrylate, propyl methacrylate, butyl methacrylate, 2-ethylhexyl methacrylate, cyclohexyl methacrylate, benzyl methacrylate, glycidyl methacrylate, and ethylene glycol dimethacrylate. These monomers can be used either individually or in combination of two or more. However, to obtain necessary mechanical strength for introducing many ion exchange groups in a later step, it is desirable to select a crosslinking monomer such as divinylbenzene or ethylene glycol dimethacrylate as at least one monomer component, and incorporate such a monomer in an amount of 1 to 90 mol%, and preferably 3 to 80 mol% of the total amount of the oil-soluble monomers.

There are no specific limitations to the types of surfactant inasmuch as a water-in-oil (w/o) type emulsion can be formed when the oil-soluble monomer not containing an ion exchange group and water are mixed. Nonionic surfactants such as sorbitan monooleate, sorbitan monolaurate, sorbitan monopalmitate, sorbitan monostearate, sorbitan trioleate, polyoxyethylene nonylphenyl ether, polyoxyethylene stearyl ether, and polyoxyethylene sorbitan monooleate; anionic surfactants such as potassium oleate, sodium dodecylbenzenesulfonate, and sodium dioctylsulfosuccinate; cationic surfactants such as a distearyldimethylammonium chloride; and amphoteric surfactants such as lauryldimethyl betaine can be used. These surfactants may be used either individually or in combination of two or more. The "water-in-oil emulsion" refers to an emulsion having a continuous oil phase in which water droplets are dispersed. Although the amount of the above surfactant to be added significantly varies according to the type of oil-soluble monomer and the size of the target emulsion particles (macropores), a specific amount can be selected in the range of about 2 to 70% of the total amount of the oil-soluble monomer and the surfactant. In addition, although not necessarily essential, alcohols such as methanol and stearyl alcohol, carboxylic acids such as stearic acid, or hydrocarbons such as octane and dodecane may be added to control the shape and size of the pore of the organic porous material.

A compound that generates radicals by heat or light is suitably used as the polymerization initiator. The polymerization initiator may be either water-soluble or oil-soluble. Examples of the initiator include azobisisobutyronitrile, azobiscyclohexanenitrile, azobiscyclohexanecarbonitrile, benzoyl peroxide, potassium persulfate, ammonium persulfate, hydrogen peroxide-ferrous chloride, sodium persulfate-acidic sodium sulfite, and tetramethylthiuram disulfide. In some reaction systems, polymerization proceeds by heat or light even if the polymerization initiator is not added. In such a case, the polymerization initiator need not be added.

A method of mixing these components all together, a method of preparing a mixture of oil-soluble components, which include oil-soluble monomers, surfactants, and oil-soluble polymerization initiators, and a solution of aqueous components, which includes water and water-soluble polymerization initiators, and mixing the mixture and solution, and other similar methods can be used. There are also no specific limitations to the mixing apparatus for forming the emulsion. A common mixer, homogenizer, or high-pressure homogenizer, and the like can be appropriately selected according to the particle size of the target emulsion. A planet-type stirrer for mixing a raw material filled into a mixing vessel, which is held inclined and caused to move around a revolution axis while rotating, can be preferably used. The planet-type stirrer is a type of apparatus disclosed in Japanese Patent Application Laid-open No. 6-71110 and Japanese Patent Application Laid-open No. 11-104404, for example. There are also no specific limitations to the mixing conditions. A rate of rotation and stirring time can be arbitrarily determined so that the emulsion having a target particle size can be obtained.

Various polymerization conditions can be selected for polymerizing the water-in-oil emulsion thus obtained according to the type of monomer and polymerization initiator. For example, when azobisisobutyronitrile, benzoyl peroxide, potassium persulfate, or the like is used as the polymerization initiator, the emulsion may be polymerized with heating at 30 to 100°C for 1 to 48 hours in a sealed vessel under an inert gas atmosphere. For example, when hydrogen peroxide-ferrous chloride, sodium persulfate-acidic sodium sulfite, or the like is used as the polymerization initiator, the emulsion may be polymerized with heating at 0 to 30°C for 1 to 48 hours in a sealed vessel under an inert gas atmosphere. After the polymerization, the reaction mixture is removed from the reaction vessel and, if necessary, extracted with a solvent such as isopropanol to remove unreacted monomers and the surfactants, thereby yielding an organic porous material.

As a method for introducing ion exchange groups into the organic porous material, known methods such as a macromolecular reaction or a graft polymerization can be used without any specific limitations. For example, as methods for introducing a sulfonic acid group, a method of sulfonating an organic porous material with chlorosulfuric acid, concentrated sulfuric acid, and fuming sulfuric acid, if the organic porous material is a styrene-divinylbenzene copolymer or the like; a method of introducing a radical initiation group or chain transfer group to an organic porous material and grafting sodium styrene sulfonate or acrylamide-2-methylpropane sulfonic acid; a method of introducing sulfonic acid group by functional group conversion after graft polymerization of glycidyl methacrylate with an organic porous material; and the like can be given. As examples of the method for introducing a quaternary ammonium group, a method of introducing a chloromethyl group using chloromethyl methyl ether or the like and reacting with a tertiary amine, if the organic porous material is a styrene-divinylbenzene copolymer or the like; a method of preparing an organic porous material by copolymerizing chloromethyl styrene and divinylbenzene and reacting the copolymer with a tertiary amine; a method of introducing a radical initiation group or chain transfer group to an organic porous material and grafting N,N,N-trimethylammonium ethylacrylate or N,N,N-trimethylammonium propylacrylamide with the resultant product; and a method of introducing a quaternary ammonium group by functional group conversion after grafting glycidyl methacrylate with an organic porous material can be given. As a method of introducing a betaine, a method of introducing a tertiary amine to the organic porous material by the method described above and then reacting the resultant product with mono-iodoacetic acid and the like can be given. As ion exchange groups to be introduced, cationic exchange groups such as a carboxylic acid group, iminodiacetic acid group, sulfonic acid group, phosphoric acid group, and phosphate group; anionic exchange groups such as a quaternary ammonium group, tertiary amino group, secondary amino group, primary amino group, polyethylene imine group, tertiary sulfonium group, and phosphonium group; amphoteric ion exchange groups such as an amino phosphoric acid group, betaine, and sulfobetaine; and the like can be given.

There are no specific limitations to the constitution of the chemical filter of the present invention inasmuch as the filter possesses an adsorption layer. Usually, the chemical filter is formed from an adsorption layer and a supporting frame (a casing) to support the adsorption layer. The casing has a function of joining the chemical filter with an existing facility (an installation site), as well as the function of supporting the adsorption layer. A process gas circulation area of the casing is made of a material that does not adsorb or generate gases, such as stainless steel, aluminum, and plastic. There are no specific limitations to the configuration of the adsorbing layer. A block with a specified thickness, a laminate of a several sheets of boards, and the like may be used. When there is a possibility that a small amount of gaseous organic contaminants may be generated from the adsorption layer or when the concentration of the organic gaseous pollutants in a processed gas is high, it is preferable to install a physical adsorption layer on the downstream side of the adsorption layer to ensure removal of the gaseous organic contaminants that could not have been removed by the adsorption layer on the upstream side.

An adsorbent for deodorization can be used as an adsorbent in the physical adsorption layer. Activated carbon, activated carbon fiber, zeolite, and the like can be given as specific examples. The adsorbent preferably has a specific surface area of 200 m²/g or more. A porous adsorbent with a specific surface area of 500 m²/g or more is more preferable. When there is a possibility that a physical adsorption agent or the like may disperse from the physical adsorption layer, a gas permeable covering material is preferably provided on the downstream side of the physical adsorption layer. As the covering material, a porous membrane or nonwoven fabric made from an organic polymer material, an aluminum mesh, a stainless steel mesh, and the like can be given. Of these materials, the nonwoven fabric of organic polymer material and the porous membrane are preferable due to their capability of allowing gases to permeate at a low pressure loss and high capability of removing fine particles.

The chemical filter of the present invention removes organic and inorganic gaseous pollutants and other contaminants from air and the atmosphere in order to produce a highly pure atmosphere in clean rooms, clean benches, and the like used in the semiconductor industry and medical facilities. As the gaseous pollutants and other contaminants, acidic gases such as sulfur dioxide, hydrochloric acid, hydrofluoric acid, and nitric acid, basic gases such as ammonia, salts such as ammonium chloride, various plasticizers represented by a phthalic ester plasticizer, phenol-type or phosphorus-type antioxidants, benzotriazole-type UV absorbers, phosphorus-type or halogen-type flame retardants, and the like can be given. Acidic gases, basic gases, and salts can be removed by ion exchange, and various plasticizers, antioxidants, UV absorbers, and flame retardants can be removed by adsorption due to their strong polarity.

Conventionally used conditions can be applied to the operation of the chemical filter of the present invention. Although there are no specific limitations, the rate of air permeation is in a range of 0.1 to 10 m/s, for example. When using a conventional particulate ion-exchange resin as an adsorption layer, the gas permeation rate is about 0.3 to 0.5 m/s. In the case of using the chemical filter of the present invention, however, gaseous pollutants can be adsorbed and removed at a greater gas permeation rate of 5 to 10 m/s, since the chemical filter with a continuous pore structure has a large ion exchange capacity that can effectively remove gaseous contaminants. The contaminant concentration in the air that can be processed by a conventional chemical filter is usually in a range of 0.1 to 10 µg/m³ for ammonia contaminant, 5 to 50 ng/m³ for hydrogen chloride contaminant, 0.1-10 µg/m³ for sulfur dioxide contaminant, and 0.1 to 5 µg/m³ for phthalic acid ester contaminant. However, if the chemical filter of the present invention is used, lower concentration contaminants, i.e., ammonia at a concentration of 100 ng/m³ or less, hydrogen chloride at a concentration of 5 ng/m³ or less, sulfur dioxide at a concentration of 100 ng/m³ or less, and phthalic acid ester at a concentration of 100 ng/m³ or less can also be sufficiently removed. The organic porous ion exchanger used as an adsorption layer is used by regenerating in the same manner as in the case of conventional ion exchange resins. Specifically, an organic porous cation exchanger is used in the acid form by acid regeneration, and an organic porous anion exchanger is used in the hydoxide form by alkali regeneration.

Since the chemical filter of the present invention has an exceptionally large pore volume and specific surface area used as an adsorption layer, and contains ion exchange groups introduced into the surface at a high density, the chemical filter can maintain the capability of adsorbing and removing gaseous pollutants even at a high gas permeation rate. In addition, such adsorbing and removing capability can be maintained even if the concentration of gaseous pollutants is very small. Because conventional particulate ion exchange resins have a slow ion exchange rate inside the particles, it is impossible to effectively use the entire ion exchange capacity. For example, in the case of a particulate ion-exchange resin with a particle size of 500 µm, assuming that contaminants can be efficiently adsorbed to a depth of 100 µm from the surface, the volume fraction of the surface layer is about 50%. The ion exchange capacity in which contaminants can be efficiently adsorbed is almost one half of the capacity of the chemical filter of the present invention. On the other hand, in the organic porous ion exchanger of the present invention, all ion exchange groups can be efficiently used due to a thin wall thickness as small as 2 to 10 µm.

### EXAMPLES

The present invention will be described in more detail by examples, which should not be construed as limiting the present invention.

### Preparation Example 1 (Preparation of organic porous cation exchanger)

Styrene (19.24 g), divinylbenzene (1.01 g), sorbitan monooleate (1.07 g), and azobisisobutyronitrile (0.05 g) were mixed and homogeneously dissolved. A water-in-oil type emulsion was obtained by adding the mixture of the styrene, divinylbenzene, sorbitan monooleate, and azobisisobutyronitrile to 180 g of deionized water and processing the resultant mixture using a planet-type agitator (a vacuum agitation defoaming mixer, manufactured by EME Co., Ltd.) under the conditions of a reduced pressure of 13.3 kPa, a ratio of bottom diameter to filling height of 1:1, a revolution (rotation around a revolution axis) of 1000 rpm, a rotation of 330 rpm, and agitation time of two minutes. After emulsification, the reaction system was sufficiently replaced with nitrogen and sealed, and the emulsion was allowed to stand to polymerize at 60°C for 24 hours. After the polymerization, the reaction mixture was extracted with isopropanol for 18 hours using a Soxhlet extractor to remove the unreacted monomers, water, and sorbitan monooleate. The reaction product was dried overnight at 85°C under reduced pressure. The inner structure of the organic porous material of the styrene/divinylbenzene copolymer containing 3 mol% of a crosslinking component was inspected by SEM. As a result, the organic porous material was confirmed to possess a continuous pore structure.

The organic porous material was cut into pieces. Dichloroethane (800 ml) was added to the pieces (5.9 g) and the mixture was heated at 60°C for 30 minutes. After cooling to room temperature, chlorosulfuric acid (30.1 g) was slowly added and the mixture was reacted at room temperature for 24 hours. After the reaction, acetic acid was added and the mixture was poured into a large amount of water to wash with the water, thereby obtaining an organic porous cation exchanger. The ion exchange capacity of the organic porous cation exchanger was 4.8 mg eq./g on dry basis. Sulfur atom mapping by EPMA confirmed that the organic porous material contained sulfonic acid groups uniformly introduced in the order of µm. Inspection by SEM confirmed that the continuous pore structure of the organic porous material was retained after introduction of ion exchange groups. The average mesopore diameter of the organic porous cation exchanger was 30 µm and the total pore volume was 10.2 ml/g.

### Preparation Example 2 (Preparation of organic porous anion exchanger)

An organic porous material was produced in the same manner as in Preparation Example 1, except for using 19.24 g of chloromethylstyrene instead of 19.24 g of styrene and the amount of sorbitan monooleate was increased to 2.25 g. The internal structure of the organic porous material was inspected by SEM, confirming that the organic porous material possessed a continuous pore structure similar to that possessed by the organic porous material of the Preparation Example 1. The organic porous material was cut into pieces. Tetrahydrofuran (500 g) was added to 5.0 g of the cut porous material pieces and the mixture was heated at 60°C for 30 minutes. After cooling to room temperature, an aqueous solution (65 g) of 30% trimethylamine was slowly added. The mixture was reacted for three hours at 50°C and then allowed to stand overnight at room temperature. After the reaction, the organic porous material was washed with acetone, then with water, and dried to obtain an organic porous anion exchanger. The ion exchange capacity of the organic porous anion exchanger was 3.7 mg eq./g of a dry organic porous anion exchanger. SIMS analysis confirmed that the organic porous material contained trimethylammonium groups uniformly dispersed therein in the order of µm. Inspection by SEM confirmed that the continuous pore structure of the organic porous material was retained after introduction of ion exchange groups. The average mesopore diameter of the organic porous cation exchanger was 25 µm and the total pore volume was 9.8 ml/g.

### Example 1 (Adsorption of basic gas using organic porous cation exchanger)

The organic porous cation exchanger prepared in Preparation Example 1 was dipped in a 3N hydrochloric acid solution for 24 hours. The organic porous cation exchanger was then washed thoroughly with deionized water and dried. The resultant organic porous cation exchanger in the hydrogen form was allowed to stand for 48 hours at 25°C and 40% RH and cut into disks with a diameter of 15 mm and a thickness of 10 mm. Five sheets of disks were laminated to obtain a sample filter, which was filled in a cylindrical column to obtain a chemical filter. Air containing ammonia at a concentration of 2,000 ng/m³ was supplied to the filter at a rate of 5.0 m/s at 25°C and 40% RH. Permeated effluent air samples were collected by the ultra pure water impinger method to determine the content of ammonium ion using ion chromatography. As a result, the ammonia concentration in the effluent air was less than 50 ng/m³, confirming that ammonia was completely removed in spite of a high rate of air permeation.

### Comparative Example 1 (Adsorption of basic gas using particulate porous cation exchange resin)

The same ammonia removal experiment as in Example 1 was carried out, except for using a sample filter prepared by filling resin beads that had been ion-exchanged into an acid form (Amberlite IR120B manufactured by Lohm and Haas, ion exchange capacity: 4.4 mg eq./g of dry resin) in a cylindrical column with a diameter of 15 mm and a height of 50 mm, instead of the organic porous cation exchanger, and attaching non-woven fabric to both ends of the cylinder. As a result, the ammonia concentration in the effluent air was 90 ng/m³, indicating that ammonia was not completely removed at a high rate of air permeation.

### Comparative Example 2 (Adsorption of basic gas using anion exchange fiber)

The same ammonia removal experiment as in Example 1 was carried out, except for using a sample filter prepared by filling ion exchange fiber nonwoven fabric (IEF-SC manufactured by NITIVY CO., Ltd., ion exchange capacity: 2.0 mg eq./g dry basis) in a cylindrical column with a diameter of 15 mm and a height of 50 mm, instead of the organic porous cation exchanger, and attaching non-woven fabric to both ends of the cylinder. As a result, the ammonia concentration in the permeated effluent gas was 80 ng/m³, indicating that ammonia was not completely removed at a high rate of air permeation.

### Example 2 (Adsorption of high concentration basic gas using organic porous cation exchanger)

A filter life test for ammonia removal was carried out, wherein the filter was operated in the same manner as in Example 1, except that air with an ammonia concentration of 100 µg/m³ was used instead of air with an ammonia concentration of 2,000 ng/m³ and the air was permeated at a rate of 0.5 m/s instead of 5 m/s. As a result, the filter was confirmed to maintain an air cleaning efficiency of 90% or more for ten days.

### Comparative Example 3 (Adsorption of high concentration basic gas using cation exchange fiber)

A filter life test for ammonia removal was carried out, wherein the filter was operated in the same manner as in Comparative Example 2, except that air with an ammonia concentration of 100 µg/m³ was used instead of air with an ammonia concentration of 2,000 ng/m³ and the air was permeated at a rate of 0.5 m/s instead of a rate of 5 m/s. As a result, the filter was confirmed to maintain an air cleaning efficiency of 90% or more for three days.

### Example 3 (Adsorption of very small concentration basic gas using organic porous cation exchanger)

An ammonia removal performance test was carried out, wherein the filter was operated in the same manner as in Example 1, except that air with an ammonia concentration of 100 ng/m³ was used instead of the air with an ammonia concentration of 2,000 ng/m³. As a result, the ammonia concentration in the permeated effluent gas was less than 50 ng/m³, indicating that a very small amount of ammonia was completely removed at a high rate of air permeation of 5.0 m/s.

### Comparative Example 4 (Adsorption of very small concentration basic gas using particulate porous cation exchange resin)

An ammonia removal performance test was carried out, wherein the filter was operated in the same manner as in Comparative Example 1, except that air with an ammonia concentration of 100 ng/m³ was used instead of the air with an ammonia concentration of 2,000 ng/m³. As a result, the ammonia concentration in the permeated effluent gas was 90 ng/m³, indicating that a very small amount of ammonia was not completely removed at a high rate of air permeation of 5.0 m/s.

### Example 4 (Adsorption of acidic gas using organic porous anion exchanger)

The organic porous anion exchanger prepared in Preparation Example 2 was dipped in a 1N sodium hydroxide solution for 24 hours. The organic porous anion exchanger was then washed thoroughly with deionized water and dried. The resultant OH-form organic porous anion exchanger was allowed to stand for 48 hours at 25°C and 40% RH and cut into disks with a diameter of 15 mm and a thickness of 10 mm. Five sheets of disks were laminated to obtain a sample filter, which was filled in a cylindrical column to obtain a chemical filter. Air containing sulfur dioxide at a concentration of 800 ng/m³ was supplied to the filter at a rate of 5.0 m/s at 25°C and 40% RH. Permeated effluent air samples were collected by the ultra pure water impinger method to determine the content of sulfur ion using ion chromatography. As a result, the sulfur dioxide concentration in the sample effluent air was less than 50 ng/m³, confirming that ammonia was completely removed in spite of a high rate of air permeation.

### INDUSTRIAL APPLICABILITY

The chemical filter of the present invention using an organic porous ion exchanger as an adsorption layer has a high ion exchange density, a large pore volume, and a large specific surface area. Therefore, the chemical filter has a high capability of adsorbing and removing gaseous pollutants, which persist even if the gas permeation rate is high and which enables gaseous pollutants to be removed even if the concentration is very small. The chemical filter can not only be applied to clean rooms in the existing semiconductor industry and clean rooms for medical treatment, but is also particularly useful in the semiconductor manufacturing industry in which the requirements for clean air is anticipated to increase ten or more times.

## Claims

1. A chemical filter comprising an adsorption layer of an organic porous ion exchanger having a continuous pore structure comprising macropores and mesopores, the macropores being interconnected with each other forming mesopores with an average diameter of 5 to 1,000 µm in the interconnected parts, and having a total pore volume of 1 to 50 ml/g, uniformly distributed ion exchange groups, and an ion exchange capacity of 3.0 mg eq./g or more on dry basis.

2. The chemical filter according to claim 1, wherein the organic porous ion exchanger is an organic porous cation exchanger or an organic porous anion exchanger.
